# EUROPEAN PATENT APPLICATION

(11) **EP 4 647 258 A1**
(43) Date of publication of application: **12.11.2025**
(21) Application number: 25172847.3
(22) Date of filing: 28.04.2025
(51) Int. Cl.: B41J 2/175

(54) **INK STORAGE BAG AND METHOD FOR MANUFACTURING INK STORAGE BAG**

(30) Priority: 09.05.2024 JP 2024076522
(71) Applicant: CANON KABUSHIKI KAISHA, Tokyo 146-8501 (JP)
(72) Inventor: KUDO, Satoshi, Tokyo (JP)
(74) Representative: WESER & Kollegen Patentanwälte PartmbB

(57) **Abstract**

An ink storage bag (101) includes a bag body (201) configured to store an ink, and a spout (202) fixed to the bag body (201). The spout (202) includes a first opening (302) configured to discharge the ink from an inside of the bag body (201) to an outside, a second opening (203) configured to refill the inside of the bag body (201) with the ink from the outside and formed at a fixing portion (W) at which the spout (202) and the bag body (201) are fixed to each other, and a seal member (204) configured to seal the second opening (203) in an openable and closable manner

## Description

### BACKGROUND

### Field of the Disclosure

The present disclosure relates to an ink storage bag and a method for manufacturing an ink storage bag.

### Description of the Related Art

From the viewpoint of the achievement of a sustainable society, used liquid storage bags (for example, ink storage bags) are collected and then reproduced as new liquid storage bags by being refilled with a liquid (for example, an ink) in some cases.

Japanese Patent Laid-Open No. 2019-198990 discloses a method for manufacturing a liquid storage bag including the steps of cutting a bag of the liquid storage bag to form a communication part (opening), pouring a liquid into a storage portion of the bag from the opening, and sealing the opening by welding, and a liquid storage bag manufactured by the same manufacturing method.

### SUMMARY

The present invention in its first aspect provides an ink storage bag body as specified in claims 1 to 9.

The present invention in its second aspect provides a method for manufacturing an ink storage bag body as specified in claims 10 to 12.

Further features of the present disclosure will become apparent from the following description of exemplary embodiments with reference to the attached drawings.

### BRIEF DESCRIPTION OF THE DRAWINGS

Fig. 1 is a perspective view illustrating a liquid ejection apparatus in an embodiment;
Fig. 2 is a perspective view illustrating a liquid storage bag in an embodiment;
Fig. 3 is a cross-sectional view taken along a line III-III in Fig. 2;
Fig. 4A is a diagram for explaining a step of sealing a supply port;
Fig. 4B is a diagram for explaining a step of sucking and discharging a liquid and gas remaining in the liquid storage bag;
Fig. 4C is a diagram for explaining a step of refilling the liquid storage bag with the liquid;
Fig. 4D is a diagram for explaining a step of inserting a seal member into the liquid storage bag;
Fig. 5A is a perspective view illustrating an example of a liquid storage bag in an embodiment;
Fig. 5B is a cross-sectional view taken along a line VB-VB in Fig. 5A;
Fig. 6A is a perspective view illustrating an example of a liquid storage bag in an embodiment;
Fig. 6B is a schematic cross-sectional view illustrating an internal structure of the liquid storage bag in the embodiment;
Fig. 7A is a schematic perspective view of a liquid storage bag before a refill port is formed;
Fig. 7B is a cross-sectional view taken along a line VIIB-VIIB in Fig. 7A;
Fig. 7C is a schematic perspective view of the liquid storage bag in which the refill port and a flow path are formed;
Fig. 7D is a cross-sectional view taken along a line VIID-VIID in Fig. 7C;
Fig. 7E is a schematic perspective view of the liquid storage bag in which the seal member is inserted;
Fig. 7F is a cross-sectional view taken along a line VIIF-VIIF in Fig. 7E;
Fig. 8 is a perspective view illustrating a liquid storage bag in an embodiment;
Fig. 9 is an exploded perspective view of a liquid storage bag in an embodiment;
Fig. 10 is a schematic cross-sectional view of a liquid storage bag in an embodiment;
Fig. 11A is a schematic see-through plan view of a liquid storage bag in an embodiment;
Fig. 11B is a schematic cross-sectional view of the liquid storage bag in the embodiment; and
Fig. 11C is a diagram for explaining liquid refilling in the embodiment.

### DESCRIPTION OF THE EMBODIMENTS

### [First Embodiment]

The technologies described in this specification have the potential to contribute to the achievement of a sustainable society, such as a decarbonized society/circular society.

In the present disclosure, description will be given of technologies capable of preventing a liquid leakage as the technologies having the potential to contribute to the achievement of a sustainable society.

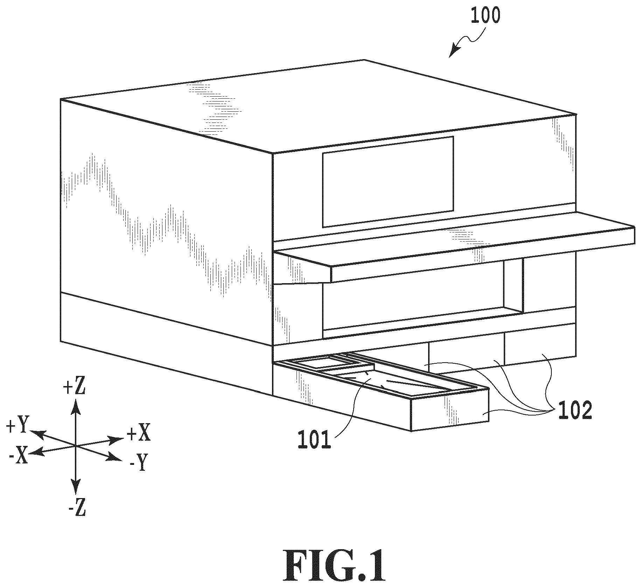

Fig. 1 is a schematic perspective view illustrating an example of a liquid ejection apparatus 100 applicable to the present embodiment. In Fig. 1, arrows X, Y, and Z indicating three directions orthogonal to each other are illustrated. The arrows X, Y, and Z are also illustrated as needed in the other drawings referred to in this specification so as to indicate the same directions as in Fig. 1.

The arrows X, Y, and Z indicate the directions in a usage posture of the liquid ejection apparatus 100 and a liquid storage bag 101 under a usual usage condition. The usual usage condition of the liquid ejection apparatus 100 is a condition where the liquid ejection apparatus 100 is placed on a horizontal plane and is used.

The Z directions indicate directions in parallel with the gravity direction. A +Z direction is the anti-gravity direction, and a -Z direction is the gravity direction. The Z directions are equal to upper-lower directions (height directions) of the liquid ejection apparatus 100. In the following description, the terms "upper" and "lower" for the liquid ejection apparatus 100 and the liquid storage bag 101 refer to the upper-lower directions based on the directions of the arrow Z, unless otherwise specified. The term "upper" indicates the +Z direction and the term "lower" indicates the -Z direction. Then, a "horizontal direction" indicates a direction orthogonal to the Z directions.

The Y directions indicate directions for attaching and detaching the liquid storage bag 101 to and from the liquid ejection apparatus 100, and are directions in parallel with front-rear directions (depth directions) of the liquid ejection apparatus 100. A +Y direction indicates a direction for attaching the liquid storage bag 101 to a main body of the liquid ejection apparatus 100, and is the direction from the front side to the rear side of the liquid ejection apparatus 100. A -Y direction indicates a direction for detaching the liquid storage bag 101 from the main body of the liquid ejection apparatus 100, and is the direction from the rear side to the front side of the liquid ejection apparatus 100.

In the following description, the terms "front" and "rear" for the liquid ejection apparatus 100 and the liquid storage bag 101 refer to the front-rear directions based on the directions of the arrow Y, unless otherwise specified. The term "front" indicates the -Y direction and the term "rear" indicates the +Y direction.

The X directions indicate directions in parallel with right-left directions (width directions) of the liquid ejection apparatus 100. A -X direction is a direction from the right side to the left side in the front view of the liquid ejection apparatus 100. A +X direction is a direction from the left side to the right side in the front view of the liquid ejection apparatus 100. In the following description, the terms "right" and "left" for the liquid ejection apparatus 100 and the liquid storage bag 101 refer to the right-left directions based on the directions of the arrow X, unless otherwise specified. The term "right" indicates the +X direction and the term "left" indicates the -X direction.

### <Liquid Ejection Apparatus 100>

As illustrated in Fig. 1, the liquid ejection apparatus 100 (for example, an ink ejection apparatus configured to be capable of ejecting inks) includes multiple cases 102 each configured to be capable of housing a single liquid storage bag 101 in which a liquid (for example, an ink) is stored. In addition to the cases 102, the liquid ejection apparatus 100 includes a liquid ejection head (not illustrated) to eject the liquids, a storage unit (not illustrated) to store print media (for example, sheets not illustrated), a print medium conveyance mechanism (not illustrated), and so on. The case 102 is configured to be mountable on and demountable from a main body of the liquid ejection apparatus 100. In a state where the cases 102 in which the liquid storage bags 101 are housed are mounted on the liquid ejection apparatus 100, the liquids can be supplied from the liquid storage bags 101 to the liquid ejection apparatus 100.

In the present embodiment, each liquid storage bag 101 stores an ink to be ejected from the liquid ejection head. For example, four liquid storage bags 101 (in other words, ink storage bags) store cyan, magenta, yellow, and block inks, respectively. Then, the four liquid storage bags 101 housed in the respective cases 102 are mounted on the liquid ejection apparatus 100. Here, the types of the inks are not limited to these four colors.

In the liquid ejection apparatus 100 in the present embodiment, the liquid ejection head is mounted on a carriage (not illustrated) that is supported by a guide rail (not illustrated) in a slidable manner and is reciprocated along the guide rail on a straight line by a driving unit (for example, a motor not illustrated or the like). A print medium to receive the liquids ejected from the liquid ejection head is conveyed by a conveyance mechanism (for example, a conveyor roller and the like) in a direction intersecting the movement directions of the carriage while facing a liquid ejection surface of the liquid ejection head.

The liquid ejection apparatus 100 in the present embodiment repeats reciprocating movement of the liquid ejection head and conveyance of a print medium by a predetermined pitch. In synchronization with these operations, the liquid ejection head selectively ejects the multiple types of liquids (for example, the above four colors of inks in the present embodiment) to apply the liquids to the print medium, thereby forming characters, symbols, an image, or the like. Hereinafter, a posture of the liquid storage bag 101 housed in the case 102 and mounted on the liquid ejection apparatus 100 under the usual usage condition will be referred to as a "usage posture".

### <Liquid Storage bag 101>

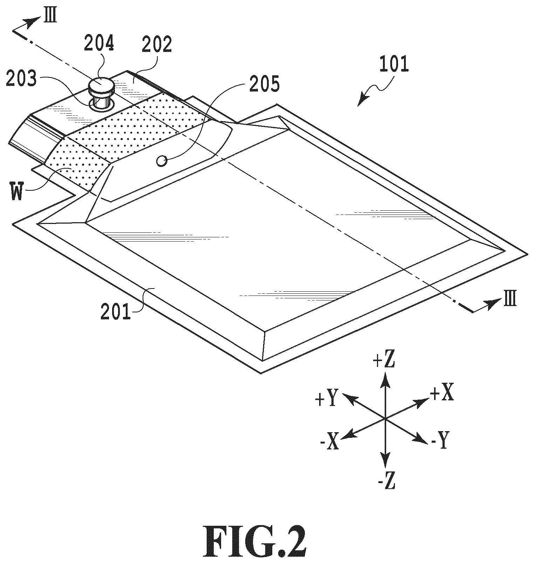

Fig. 2 is a perspective view illustrating an example of the liquid storage bag 101 applicable to the present embodiment. The directions indicated by X, Y, and Z indicate the directions of the liquid storage bag 101 under the usage condition. In a state where the liquid storage bag 101 is not mounted on a printing apparatus, the orientation of the liquid storage bag 101 may be changed as desired. The same applies to the following drawings in which the liquid storage bag 101 is illustrated alone.

As illustrated in Fig. 2, the liquid storage bag 101 includes a bag body 201 configured to store an ink thereinside and a spout 202 configured to allow a liquid to be discharged from the inside of the bag body 201 to an outside.

In the present embodiment, there is a case where the inside of the bag body 201 is refilled with the liquid from the outside of the spout 202. In the spout 202, a refill port 203 for liquid refilling is formed. In Fig. 2, a seal member 204 (for example, a plug) for liquid-tightly sealing the refill port 203 is inserted in the refill port 203 in a detachable manner.

The bag body 201 is flexible. Fig. 2 illustrates a state where the liquid is stored in the bag body 201. As the liquid is supplied from the liquid storage bag 101 to the liquid ejection apparatus 100 (see Fig. 1), the bag body 201 is gradually squeezed and approaches a flat shape. The liquid stored in the bag body 201 is introduced into the inside of the spout 202 from an inlet 205 formed in the spout 202, and is supplied to the liquid ejection apparatus 100 (see Fig. 1).

The liquid storage bag 101 also includes an electrical connector (not illustrated) for electrically connecting with the liquid ejection apparatus 100. In a case where the liquid storage bag 101 is mounted on the liquid ejection apparatus 100 together with the case 102 (see Fig. 1), the electrical connector is electrically connected with a connection mechanism (not illustrated) of the liquid ejection apparatus 100, and the liquid storage bag 101 is made ready to supply the liquid to the liquid ejection apparatus 100.

In the present embodiment, a pillow-type bag body 201 is used in which two films are placed one upon another and outer peripheries of the opposing surfaces of these two films are fixed (for example, welded) to each other, except for a space for inserting and fixing (for example, welding) the spout 202. A fixing portion W of the spout 202 is inserted into the bag body 201 from an opening of the bag body 201 and is fixed (for example, welded) to an inner peripheral surface of the bag body 201.

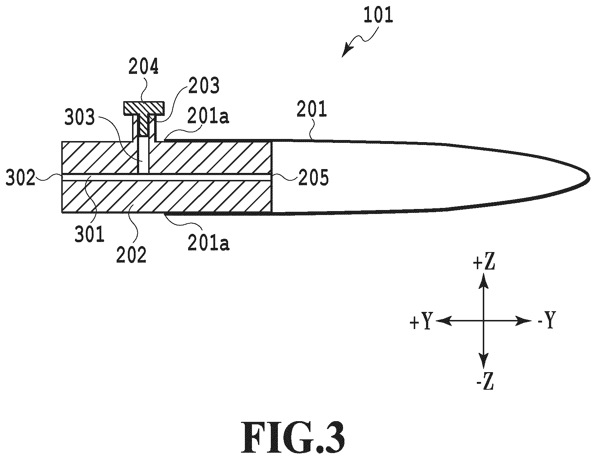

Fig. 3 is a cross-sectional view taken along a III-III line in Fig. 2.

As illustrated in Fig. 3, the liquid storage bag 101 includes the bag body 201 to store the liquid and the spout 202 fixed to the bag body 201. The spout 202 includes a first opening (supply port 302) for discharging the liquid from the inside of the bag body 201 to the outside and supplying it to the liquid ejection apparatus 100 (see Fig. 1), and a second opening (refill port 203) for refilling the inside of the bag body 201 with the liquid from the outside. The spout 202 includes the seal member 204 detachably insertable in the second opening and configured to seal the second opening in an openable and closable manner.

In the spout 202, a first flow path 301 passing through the spout 202 along the Y direction is formed. The first flow path 301 includes the inlet 205 for introducing the liquid stored in the bag body 201 into the first flow path 301 in a state where the spout 202 is fixed to an end 201a of the bag body 201 on the +Y direction side. Then, in the first flow path 301, the supply port 302 is formed for supplying the liquid ejection apparatus 100 (see Fig. 1) with the liquid introduced into the first flow path 301 from the inlet 205.

In the spout 202, a flow path 303 is formed which connects the outside of the spout 202 and the first flow path 301. The flow path 303 is liquid-tightly closed with the seal member 204 inserted therein. In a case where the supply port 302 is closed and the seal member 204 is detached, the inside of the bag body 201 can be refilled with the liquid from the outside of the spout 202 via the entire flow path 303 and a part of the first flow path 301.

The films constituting the bag body 201 contain a flexible material having gas-barrier properties. Examples of the material applicable to the films include polyethylene terephthalate (PET), nylon, polyethylene, and so on.

In addition, the film may be formed by using a layered structure in which multiple sheet members containing any of these materials are laminated. In such a layered structure, for example, a sheet member constituting an outer layer may be formed of PET or nylon having excellent impact resistance and a sheet member constituting an inner layer may be formed of polyethylene having excellent fluid resistance. The layered structure of the film may further contain a layer made of a vapor-deposited metal (for example, such as aluminum).

Moreover, in a case where the sheet member constituting the inner layer of the film and the spout 202 are produced from the same material, they have the same melting point, thereby further improving the weldability between the bag body 201 and the spout 202.

### <Ink Refilling Method>

In the present embodiment, an ink refilling method will be described on the assumption that a used-up liquid storage bag 101 is collected, and the used-up liquid storage bag 101 is refilled with the liquid and reproduced as a new liquid storage bag 101. However, the technologies disclosed herein may be applied to the manufacturing of liquid storage bags 101 before market release (in other words, brand-new liquid storage bags 101). In the present embodiment, the liquid storage bag 101 is refilled with the liquid with the supply port 302 oriented in the anti-gravity direction (+Z direction).

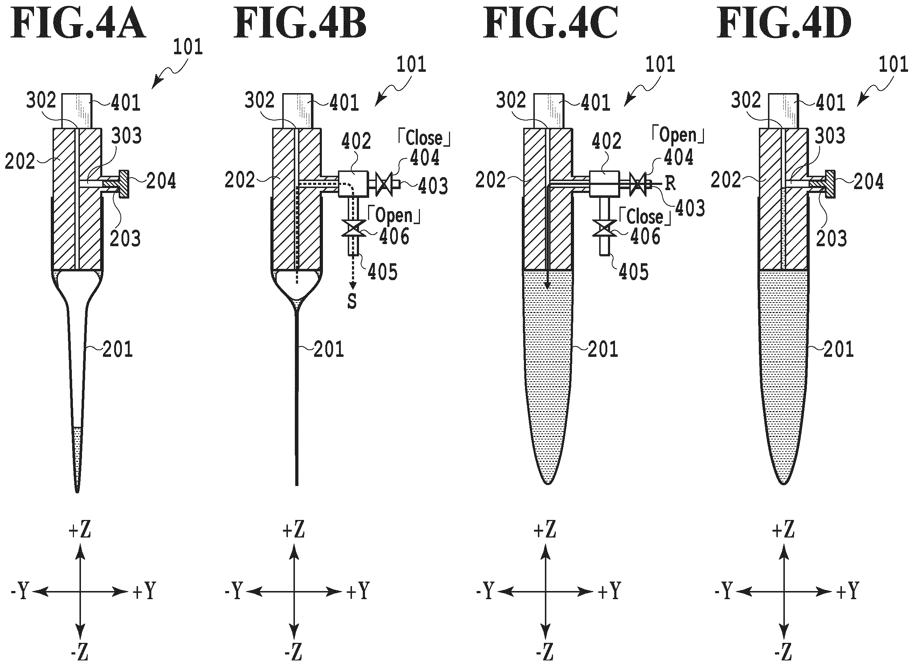

Fig. 4A is a diagram for explaining a step of sealing the supply port 302.

As illustrated in Fig. 4A, in this step, a seal member 401 configured to be detachably attachable to the supply port 302 is attached to the supply port 302, and thereby liquid-tightly seals the supply port 302. The seal member 401 is not limited as long as the seal member 401 can liquid-tightly seal the supply port 302. Examples of the seal member 401 include a lid, a film, a tape, or the like.

Here, it is desirable that the liquid in the liquid storage bag 101 be used up before this step is performed and no liquid remain in the bag body 201. However, it does not matter even if some liquid remains in the bag body 201 in this step. This is because, even if the liquid remains, all the remaining liquid is discharged in the following step. A step in Fig. 4B is performed after the step in Fig. 4A is completed.

Fig. 4B is a diagram for explaining a step of sucking and discharging the liquid and gas remaining in the liquid storage bag 101. An arrow "S" in Fig. 4B indicates a flow of the liquid and gas to be discharged.

As illustrated in Fig. 4B, in this step, a liquid introduction/discharge device 402 is used to discharge the liquid and gas. The liquid introduction/discharge device 402 includes a refill tube 403 for refilling the liquid storage bag 101 with the liquid, a valve 404 for switching the refill tube 403 between open and close states as needed, a discharge tube 405 for discharging the liquid and gas from the liquid storage bag 101, and a valve 406 for switching the discharge tube 405 between open and close states as needed. In Fig. 4B, the valve 404 is closed, whereas the valve 406 is opened.

In this step, the liquid introduction/discharge device 402 is attached to the refill port 203 after the seal member 204 (see Fig. 4A and others) is removed. Then, the valve 404 of the liquid introduction/discharge device 402 is closed to disable the liquid from entering the refill tube 403. In this state, the valve 406 is opened and a pressure reducing device (for example, a suction pump not illustrated or the like) connected to the liquid introduction/discharge device 402 is driven, so that the liquid and gas are sucked out from the inside of the liquid storage bag 101 to the outside via the discharge tube 405.

This makes it possible to prevent the old liquid and a new liquid from being mixed together in the liquid storage bag 101 in a subsequent step of refilling the liquid storage bag 101 with the new liquid. In the manufacturing of the liquid storage bags 101 before market release, dust and the like are sucked out from the inside of the liquid storage bag 101 to the outside by using the pressure reducing device and the liquid introduction/discharge device 402. This makes it possible to prevent the dust and the like from being mixed with the liquid provided in the subsequent step of refilling. A step in Fig. 4C is performed after the step in Fig. 4B is completed.

Fig. 4C is a diagram for explaining a step of refilling the liquid storage bag 101 with the liquid. An arrow "R" in Fig. 4C indicates a flow of the liquid to be provided in the refilling. In Fig. 4C, the valve 404 is opened, whereas the valve 406 is closed.

In this step, the valve 406 is closed to disable the liquid from being discharged via the discharge tube 405. The valve 404 (see Fig. 4B) is opened to enable the liquid storage bag 101 to be refilled with the liquid via the refill tube 403. The supply port 302 is sealed by the seal member 401.

In this step, the liquid storage bag 101 is refilled with the liquid via the refill tube 403 with the supply port 302 sealed, the valve 406 closed, and the valve 404 opened, as described above. A step in Fig. 4D is performed after the step in Fig. 4C is completed.

Fig. 4D is a diagram for explaining a step of inserting the seal member 204 into the liquid storage bag 101.

As illustrated in Fig. 4D, in this step, the liquid introduction/discharge device 402 is detached and the seal member 204 is inserted into the refill port 203. This prevents the liquid provided by the refilling from leaking, no matter what posture the liquid storage bag 101 is placed in. In the present embodiment, the used-up liquid storage bag 101 is refilled with the new liquid as described above, thereby reproducing a capacity to supply the liquid to the liquid ejection apparatus 100 (see Fig. 1).

In the present embodiment, in the liquid refilling, it is unnecessary to cut the bag body to form an opening and then close the opening by welding as described above, unlike the technique in Japanese Patent Laid-Open No. 2019-198990.

Thus, the liquid storage bag in the present embodiment can be prevented from causing a liquid leakage. Moreover, the liquid storage bag in the present embodiment can be refilled with the liquid. Accordingly, it is possible to provide a liquid storage bag having the potential to contribute to the achievement of a sustainable society, such as a decarbonized society/circular society.

### [Second Embodiment]

Hereinafter, different points from those in the first embodiment will be mainly described while the constituents same as or corresponding to those in the first embodiment will be denoted with the same reference signs, and description thereof will be omitted. The present embodiment has an object to provide a liquid storage bag 101 further reduced in size.

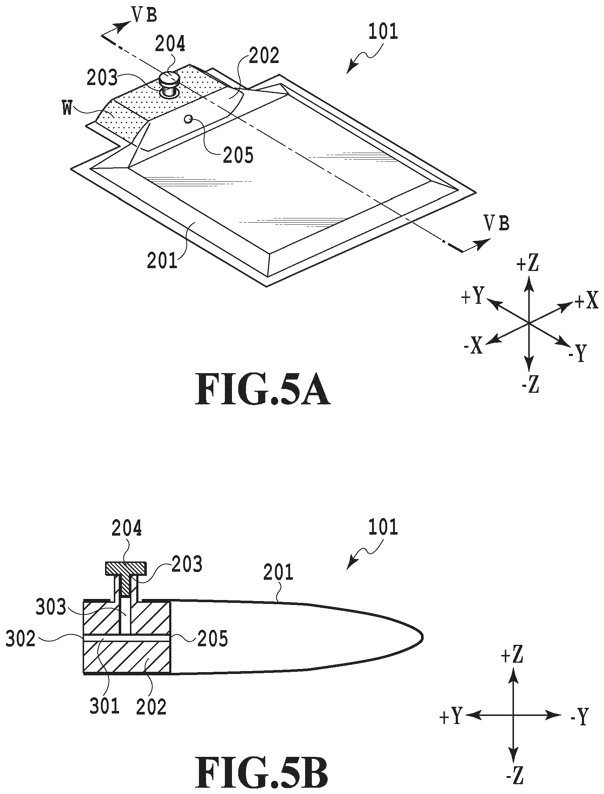

Fig. 5A is a perspective view illustrating an example of the liquid storage bag 101 applicable to the present embodiment. As illustrated in Fig. 5A, a second opening (refill port 203) is formed in a fixing portion W (for example, a welded portion) at which a spout 202 and a bag body 201 are fixed.

Fig. 5B is a cross-sectional view taken along a line V B -V B in Fig, 5A. As illustrated in Fig. 5B, the length of the spout 202 (the size in the Y direction) in the present embodiment is shorter than in the first embodiment. In other words, the length of a first flow path 301 (see Fig. 3) is also shorter than in the first embodiment. With this structure, the distance from an inlet 205 to a flow path 303 (see Fig. 3) is smaller than in the first embodiment. In other words, a time required for the liquid and gas to pass through the first flow path 301 and the flow path 303 is shorter than in the first embodiment.

According to the liquid storage bag 101 in the present embodiment, a time required for the step of discharging the liquid and gas from the bag body 201 and the step of refilling the bag body 201 with the liquid can be made shorter than in the first embodiment. Moreover, it is also possible to reduce the size of the liquid storage bag 101 without reducing a capacity of the storable liquid.

### [Third Embodiment]

Hereinafter, different points from those in the first and second embodiments will be mainly described while the constituents same as or corresponding to those in the first and second embodiments will be denoted with the same reference signs, and description thereof will be omitted. The present embodiment has an object to provide a liquid storage bag 101 capable of stopping contaminants such as impurities in a bag body 201 from being supplied to an apparatus main body.

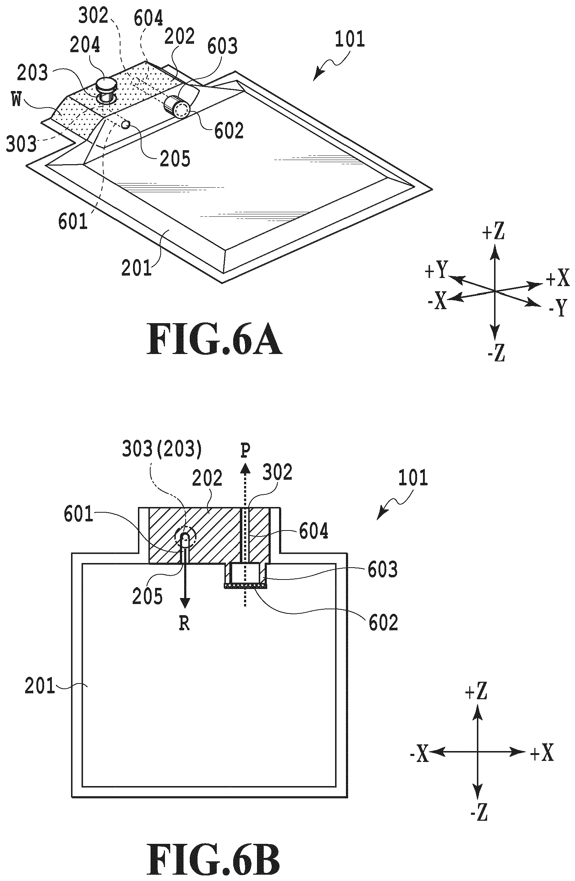

Fig. 6A is a perspective view illustrating an example of the liquid storage bag 101 applicable to the present embodiment.

As illustrated in Fig. 6A, a spout 202 includes a flow path 601 connecting a seal member 204, a refill port 203, and a flow path 303 to an inlet 205 and extending in the Y direction in the usage posture. The spout 202 includes a filter 602 disposed inside the bag body 201 and configured to filter the liquid flowing from the inside of the bag body 201 toward a first opening (supply port 302).

In the present embodiment, there is a case where a user forms the refill port 203 and the flow path 303 by drilling a hole in the spout 202 with a drill or the like, as details will be described later. In the case where the spout 202 is processed in this way, shavings of the spout 202 may enter the inside of the bag body 201.

Here, the filter 602 has a mesh for capturing the shavings of the spout 202 having entered the inside of the bag body 201. Thus, even if the shavings of the spout 202 enter the inside of the bag body 201, the shavings are captured by the mesh of the filter 602. This prevents the shavings of the spout 202 from being supplied to the liquid ejection apparatus 100 (see Fig. 1).

The spout 202 includes a filter cavity 603 to which the filter 602 is attached and a flow path 604 connecting the filter cavity 603 to the outside and extending in the Y direction in the usage posture.

In the present embodiment, in the liquid discharge before the liquid refilling, the liquid and gas are discharged by passing through the inlet 205, the flow path 601, the flow path 303, and the refill port 203 in this order. Then, in the liquid refilling after the discharge of the liquid and gas, the liquid passes through the refill port 203, the flow path 303, the flow path 601, and the inlet 205 in this order for refilling.

Fig. 6B is a cross-sectional view illustrating an internal structure of the liquid storage bag 101 applicable to the present embodiment. An arrow R in Fig. 6B indicates a flow of the liquid for refilling the liquid storage bag 101. An arrow P in Fig. 6B indicates a flow of the liquid for supplying the liquid ejection apparatus 100.

As illustrated in Fig. 6B, the filter cavity 603 to which the filter 602 is fixed (for example, welded) is formed in the spout 202 in the present embodiment. In the present embodiment, the filter cavity 603 is formed integrally with a main body of the spout 202. Alternatively, the filter cavity 603 may be formed of a member different from a member constituting the main body of the spout 202.

In supplying the liquid to the liquid ejection apparatus 100 (see Fig. 1), the liquid is supplied by passing through the filter 602, the filter cavity 603, the flow path 604, and the supply port 302 in this order (see the arrow P). The filter 602 is configured to be capable of filtering the liquid and capturing foreign substances having entered the inside of the bag body 201 for some reason. For example, even if shavings of the spout 202 enter the inside of the bag body 201, the shavings are captured by the filter 602.

According to the liquid storage bag 101 in the present embodiment, it is possible to stop contaminants such as impurities from being supplied to the apparatus main body.

### [Method for Manufacturing Liquid Storage bag 101 in Present Embodiment]

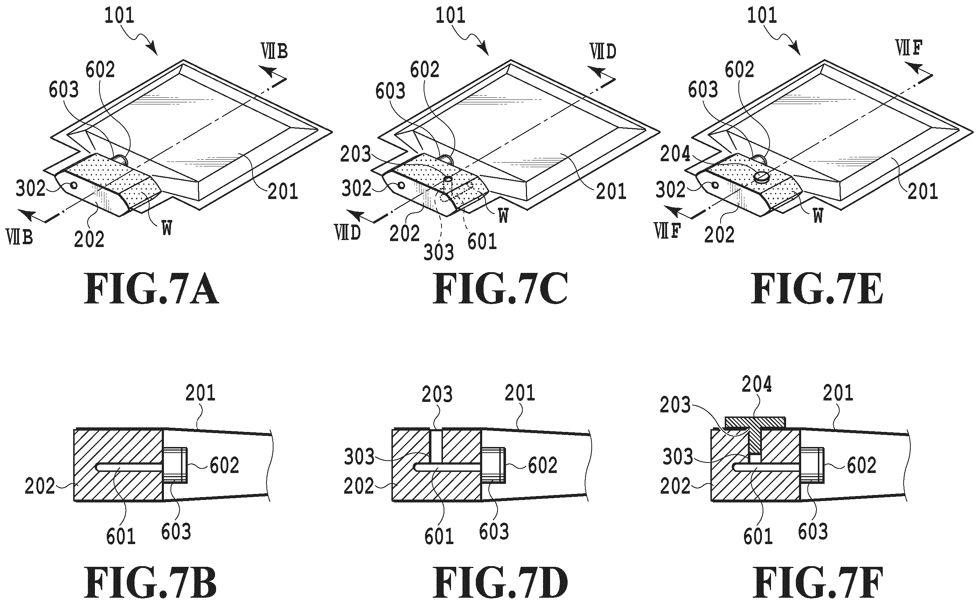

Fig. 7A to 7F are diagrams for explaining steps of forming the refill port 203 and the flow path 303 in the spout 202 in the present embodiment. Fig. 7A is a schematic perspective view of the liquid storage bag 101 before the refill port 203 is formed.

As illustrated in Fig. 7A, for the steps of manufacturing the liquid storage bag 101 in the present embodiment, the liquid storage bag 101 including all the constituents excluding the refill port 203 (see Fig. 6A), the flow path 303, and the seal member 204 (see Fig. 6A) is prepared. For example, at this time point, the supply port 302 and so on are already formed in the spout 202.

Fig. 7B is a cross-sectional view taken along a line VIIB-VIIB in Fig. 7A.

As illustrated in Fig. 7B, in the step of preparing the liquid storage bag 101, the flow path 601 is formed in the spout 202 but the refill port 203 (see Fig. 6A) and the flow path 303 (see Fig. 6A) are not formed in the spout 202. At this time point, the fixing (for example, welding) of the spout 202 and the bag body 201 is already completed. After the step of preparing the liquid storage bag 101, a step of forming the refill port 203 and the flow path 303 is performed.

Fig. 7C is a schematic perspective view of the liquid storage bag 101 in which the refill port 203 and the flow path 303 are formed.

As illustrated in Fig. 7C, after the liquid storage bag 101 is prepared, the refill port 203 and the flow path 303 are formed in the spout 202.

Fig. 7D is a cross-sectional view taken along a line VIID-VIIDin Fig. 7C.

As illustrated in Fig. 7D, the refill port 203 and the flow path 303 are formed in the spout 202 so as to connect the flow path 601 to the outside.

In the present embodiment, after the liquid storage bag 101 in which the refill port 203 and the flow path 303 are not formed yet is purchased and used up by a user, the refill port 203 may be formed. In this case, the refill port 203 may be formed by the user. Alternatively, for example, a vendor or the like may collect the liquid storage bag 101 and form the refill port 203 in the collected liquid storage bag 101.

For example, in a case where a drill or the like is used to form the refill port 203, shavings of the spout 202 are sometimes generated and enter the inside of the bag body 201 via the flow path 601. In the present embodiment, however, even if the shavings have entered the inside of the bag body 201, the shavings are captured by the filter 602. For this reason, the possibility of the shavings being supplied to the liquid ejection apparatus 100 is extremely low. A step of inserting the seal member 204 is performed after the step of forming the refill port 203.

Fig. 7E is a schematic perspective view of the liquid storage bag 101 in which the seal member 204 is inserted.

As illustrated in Fig. 7E, the seal member 204 is inserted into the refill port 203 in the step of inserting the seal member 204.

Fig. 7F is a cross-sectional view taken along a line VIIF-VIIF in Fig. 7E. As illustrated in Fig. 7F, the flow path 303 is sealed with the seal member 204 inserted in the refill port 203.

According to the foregoing manufacturing method in the present embodiment, even if the refill port 203 and flow path 303 are not formed at a time of initial market distribution, the refill port 203 and flow path 303 can be formed after the market distribution. Then, the recyclable liquid storage bag can be manufactured by inserting the seal member 204.

In the present embodiment, as described above, if a user wishes to recycle the liquid storage bag 101, a recyclable liquid storage bag 101 can be manufactured by performing the simple procedures. The liquid storage bags 101 thus manufactured have the potential to contribute to the achievement of a sustainable society.

### [Fourth Embodiment]

Hereinafter, different points from those in the first, second, and third embodiments will be mainly described while the constituents same as or corresponding to those in the first, second, and third embodiments will be denoted with the same reference signs, and description thereof will be omitted. The present embodiment has an object to provide a liquid storage bag 101 having higher reliability than in the first, second, and third embodiments.

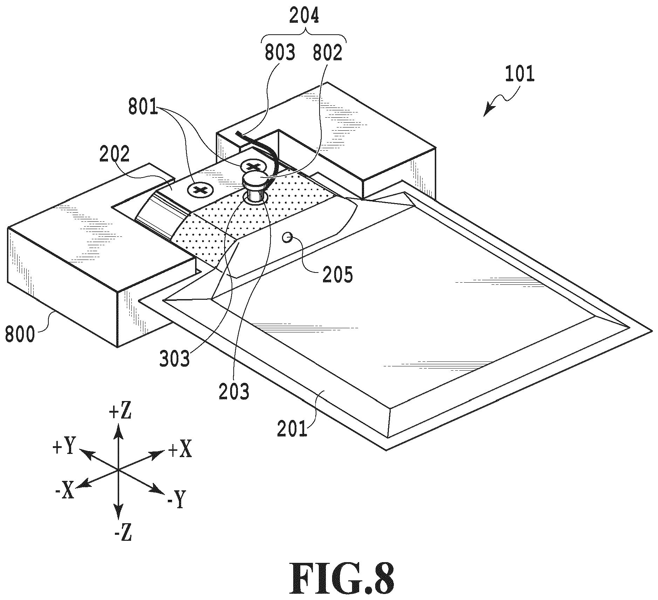

Fig. 8 is a perspective view illustrating an example of the liquid storage bag 101 applicable to the present embodiment.

As illustrated in Fig. 8, the liquid storage bag 101 in the present embodiment includes an adapter 800 for connecting with the liquid ejection apparatus 100 (see Fig. 1). A seal member 204 includes a seal unit 802 for sealing a second opening (refill port 203) and a cord-shaped binder 803 which binds the seal unit 802 to the adapter 800. In the present embodiment, an electrical connector (not illustrated) for electrically connecting with the liquid ejection apparatus 100 is disposed in the adapter 800.

A spout 202 is fixed to the adapter 800 by screws 801. In the spout 202 in the present embodiment, through holes (not illustrated) are formed which pass through the spout 202 in the Z direction in the usage posture. In the adapter 800, screw holes (not illustrated) are formed at positions corresponding to the above through holes. The screws 801 are inserted through the through holes of the spout 202, and are screwed in the screw holes of the adapter 800. In the present embodiment, the head of each of the screws 801 is grooved in a Phillips shape. Instead, if the screw head is grooved in a specific shape (for example, a Y-shape), it is possible to prevent the screw 801 from being removed with a general Phillips or flathead screwdriver.

The seal member 204 in the present embodiment includes the seal unit 802 for sealing the flow path 303 in an openable and closable manner, and the cord-shaped binder 803 which binds the seal unit 802 to the adapter 800. In the seal member 204 in the present embodiment, the seal unit 802 and the binder 803 are formed integrally.

An end of the binder 803 is fixed (for example, welded) to the adapter 800. A material for constituting the binder 803 contains a resin (for example, an elastomer). The binder 803 and the adapter 800 are desirably made of the same material. In the case where the binder 803 and the adapter 800 are made of the same material, they have the same melting point. With the same melting point, the weldability for boning the binder 803 and the adapter 800 by welding is improved.

With this structure, the seal member 204 can be prevented from falling down in the work of inserting or removing the seal unit 802 into or from the refill port 203. Since the seal member 204 is prevented from falling down, the workability for liquid refilling can be improved.

In addition, the seal unit 802 and the binder 803 may be in the same color or different colors. In the case where the seal unit 802 and the binder 803 are in different colors, they can be easily visually distinguished from each other, which makes it easy to insert and remove the seal unit 802.

Although the present embodiment is described on the assumption that the seal unit 802 and the binder 803 are formed integrally, the seal unit 802 and the binder 803 may be formed as different members. Even with this structure, the seal member 204 in the present embodiment can be manufactured.

### [Fifth Embodiment]

Hereinafter, different points from those in the first, second, third, and fourth embodiments will be mainly described while the constituents same as or corresponding to those in the first, second, third, and fourth embodiments will be denoted with the same reference signs, and description thereof will be omitted. The present embodiment has an object to provide a liquid storage bag 101 having higher reliability than in the first, second, third, and fourth embodiments.

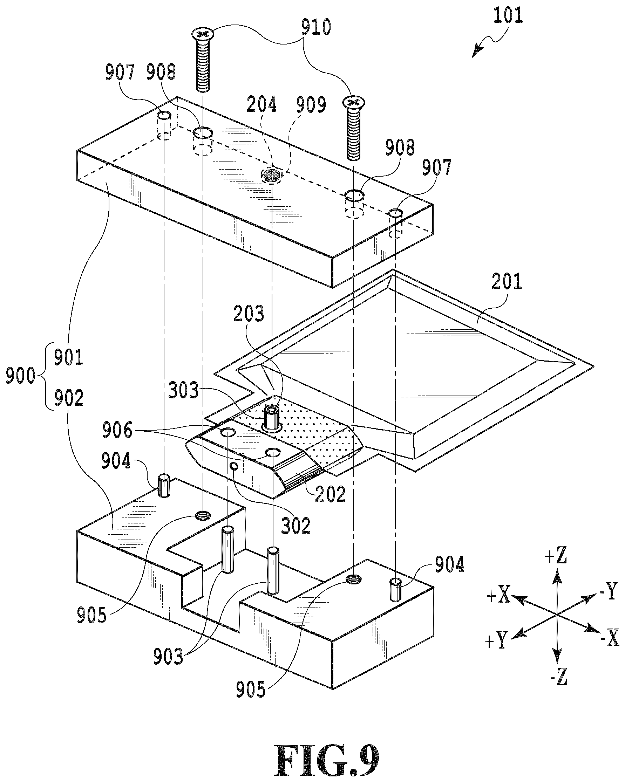

Fig. 9 is an exploded perspective view of the liquid storage bag 101 applicable to the present embodiment.

As illustrated in Fig. 9, an adapter 900 includes a first member (lower adapter 902) and a second member (upper adapter 901) between which the spout 202 is fixed. The first member (lower adapter 902) has protrusions 903 that function as positioning portions for positioning the spout 202. The second member (upper adapter 901) has a seal member 204.

For example, the adapter 900 to which the spout 202 is fixed includes the upper adapter 901 located on the upper side of the bag body 201 and the lower adapter 902 located on the lower side of the bag body 201 in the usage posture. The lower adapter 902 includes the protrusions 903, protrusions 904, and screw holes 905 each extending in the vertical direction (Z direction) in the usage posture. In the spout 202 in the present embodiment, through holes 906 are formed which pass through the spout 202 in the vertical direction (Z direction) in the usage posture. In the upper adapter 901, through holes 907 and through holes 908 are formed which pass through the upper adapter 901 in the vertical direction (Z direction) in the usage posture.

Further, although details will be described later, a recessed portion 909 is formed in the lower surface of the upper adapter 901 (the surface facing in the -Z direction in the usage posture). The seal member 204 is inserted in the recessed portion 909.

In the present embodiment, the seal member 204 seals the refill port 203 in a state where the spout 202 is fixed between the lower adapter 902 and the upper adapter 901. In assembling the liquid storage bag 101 in the present embodiment, the through holes 906 of the spout 202 are fitted to the protrusions 903 of the lower adapter 902.

Then, the through holes 907 of the upper adapter 901 are fitted to the protrusions 904 of the lower adapter 902. In the state where the through holes 907 of the upper adapter 901 are fitted to the protrusions 904 of the lower adapter 902, the through holes 908 of the upper adapter 901 are mated with the screw holes 905 of the lower adapter 902. In the state where the through holes 908 of the upper adapter 901 are mated with the screw holes 905 of the lower adapter 902, screws 910 are inserted through the through holes 908, and are screwed in the screw holes 905 of the lower adapter 902. In this way, the spout 202 is fixed between the lower adapter 902 and the upper adapter 901 in the present embodiment.

In the present embodiment, in order to refill the liquid storage bag 101 with the liquid, the screws 910 are unscrewed, so that the adapter 900 can be divided into the lower adapter 902 and the upper adapter 901. As a result of removing the upper adapter 901 from the refill port 203 of the spout 202, the refill port 203 is opened to allow the liquid to pass therethrough for refilling. In addition, the head of each of the screws 910 may be grooved in a specific shape as described above.

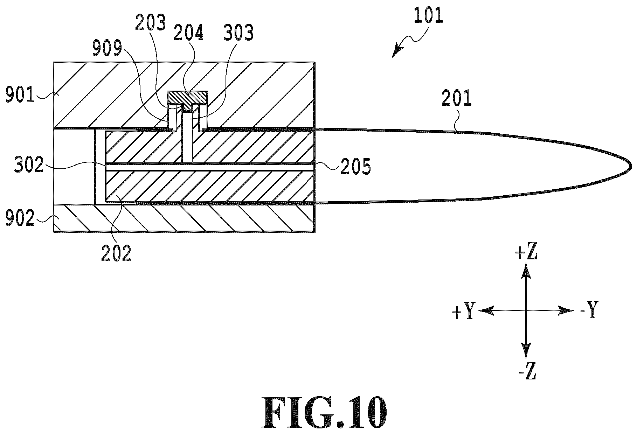

Fig. 10 is a schematic cross-sectional view of the liquid storage bag 101 applicable to the present embodiment.

As illustrated in Fig. 10, the seal member 204 is inserted in the recessed portion 909 formed in the lower surface of the upper adapter 901 (the surface facing in the -Z direction in the usage posture). In the state where the spout 202 is fixed between the lower adapter 902 and the upper adapter 901, the seal member 204 is fitted into the refill port 203. In the present embodiment, the flow path 303 is sealed by the seal member 204 in this way.

In the present embodiment, for example, the upper adapter 901 is made of a resin, whereas the seal member 204 is made of an elastomer. The upper adapter 901 and the seal member 204 may be in the same color or different colors. In the case where the upper adapter 901 and the seal member 204 are in different colors, they can be visually distinguished easily.

In the structure in the present embodiment, the spout 202 is fixed between the upper adapter 901 and the lower adapter 902 in the state where the refill port 203 is sealed by the seal member 204 inserted in the recessed portion 909 of the upper adapter 901. Therefore, for example, even in a case where the liquid storage bag 101 falls down for some reason, the seal member 204 is prevented from coming off the refill port 203.

In addition, since the surroundings of the refill port 203 and the seal member 204 are covered with the upper adapter 901, the refill port 203 and the seal member 204 are protected from damage even in a case, for example, where the liquid storage bag 101 falls down.

Accordingly, the structure in the present embodiment makes it possible to provide the liquid storage bag 101 having high reliability.

### [Sixth Embodiment]

Hereinafter, different points from those in the first, second, third, fourth, and fifth embodiments will be mainly described while the constituents same as or corresponding to those in the first, second, third, fourth, and fifth embodiments will be denoted with the same reference signs, and description thereof will be omitted. The present embodiment has an object to provide a liquid storage bag 101 having high reliability.

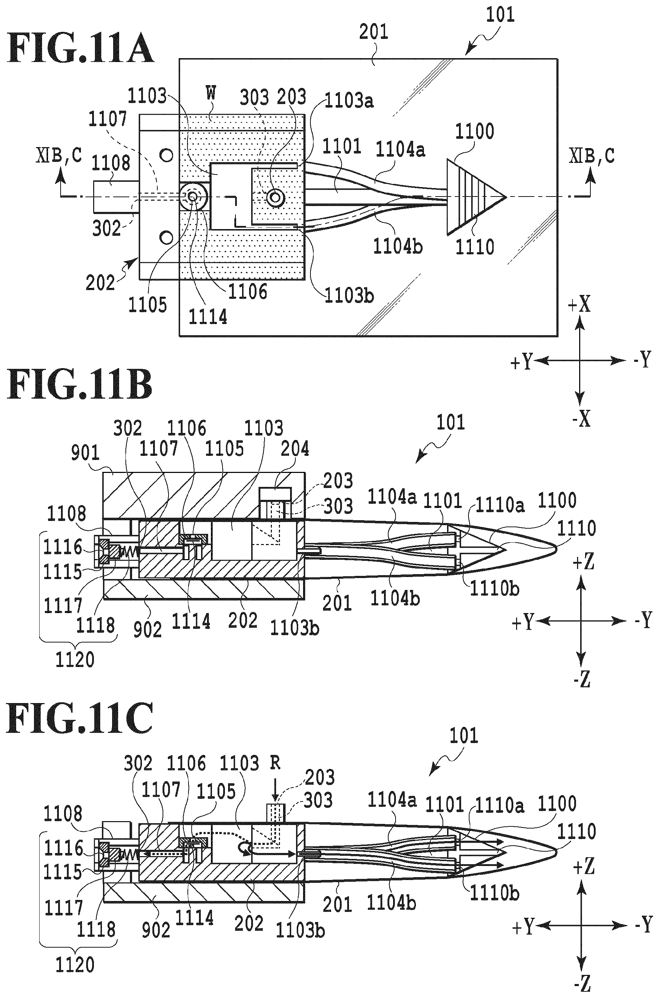

Fig. 11A is a schematic see-through plan view of the liquid storage bag 101 applicable to the present embodiment. Although the liquid storage bag 101 in the present embodiment includes an adapter 900 (see Fig. 9), Fig. 11A does not illustrate the adapter 900 for convenience of description.

As illustrated in Fig. 11A, a spout 202 includes a refill port 203 and a flow path 303. In the spout 202 in the present embodiment, a flow path 1103 connected to the flow path 303 is formed. The flow path 303 in the present embodiment is formed so as to connect the refill port 203 and the flow path 1103.

The flow path 1103 is formed so as to split into two branches which extend from a center portion toward a rear side (-Y direction side) of the spout 202. One of the two branches of the flow path 1103 will be referred to as a flow path 1103a, and the other branch will be referred to as a flow path 1103b. The flow path 1103a is connected to a flexible flow path member 1104a. The flow path 1103b is connected to a flexible flow path member 1104b. The flow path member 1104a and the flow path member 1104b are connected to a spacer 1100. The spacer 1100 is supported by a rod-shaped support member 1101 extending from the spout 202 toward the rear side (-Y direction side).

In the flow path 1103, a check valve 1114 is disposed forward (+Y direction side) of the center of the spout 202. The check valve 1114 is covered with a cover 1106 having an opening 1105.

In the spout 202, a flow path 1107 is formed forward (+Y direction side) of the check valve 1114. The flow path 1107 is connected to the flow path 1103 via the check valve 1114 and the opening 1105. In the spout 202, an introduction port 1108 for introducing a liquid to the liquid ejection apparatus 100 (see Fig. 1) is formed forward (+Y direction side) of the flow path 1107. The introduction port 1108 is connected to the flow path 1107. In the present embodiment, the refill port 203 is disposed between the check valve 1114 and the bag body 201.

Fig. 11B is a schematic cross-sectional view of the liquid storage bag 101 applicable to the present embodiment.

As illustrated in Fig. 11B, the liquid storage bag 101 includes a lower adapter 902 and an upper adapter 901. In the state where the spout 202 is fixed between the lower adapter 902 and the upper adapter 901, the refill port 203 is sealed by the seal member 204 fixed to the upper adapter 901.

The spacer 1100 includes an opening 1110a located above (on the +Z direction side of) the support member 1101 and an opening 1110b located below (on the -Z direction side of) the support member 1101 in the usage posture of the liquid storage bag 101. The opening 1110a is connected to the flow path member 1104a. The opening 1110b is connected to the flow path member 1104b. In this structure, the liquid taken in from the opening 1110a and the liquid taken in from the opening 1110b can be merged in the flow path 1103.

For example, in a case where the liquid is a pigment ink containing a colorant with relatively large particles, the colorant precipitates on the lower side of the bag body 201 and causes concentration unevenness in some cases. In this case, the liquid having a relatively high concentration tends to be taken in from the opening 1110b, whereas the liquid having a relatively low concentration tends to be taken in from the opening 1110a. Even if the liquids having different concentrations are taken in from the flow path member 1104a and the flow path member 1104b, these liquids are merged in the flow path 1103, and then the resultant liquid having the equalized concentration can be supplied to the liquid ejection apparatus 100 (see Fig. 1).

Moreover, as the liquid is consumed, the shape of the bag body 201 approaches a flat shape. As the shape of the bag body 201 approaches the flat shape, the inside of the bag body 201 is choked, making it difficult to suck up the liquid. To address this, the spacer 1100 having a certain height (length in the Z direction in the usage posture) forms a certain space inside the bag body 201. This controls a deformation of the bag body 201 approaching the flat shape, thereby preventing the inside of the bag body 201 from being choked. In other words, forming a certain space, the spacer 1100 contributes to improvement of the ease of using up the liquid.

In addition, a valve unit 1120 is disposed inside the introduction port 1108. The valve unit 1120 includes a spring 1118 fixed to the neighborhood of the supply port 302, a valve 1117 biased in the +Y direction by the spring 1118, and a seal member 1115 having an opening 1116. In the example of Fig. 11B, the opening 1116 is sealed by the valve 1117. The opening 1116 is opened with the valve 1117 moved away from the seal member 1115. In the state where the opening 1116 is opened, the liquid can be supplied from the liquid storage bag 101 to the liquid ejection apparatus 100 (see Fig. 1).

For example, the liquid ejection apparatus 100 includes a hollow needle (not illustrated). The hollow needle has an opening (not illustrated) through which the inside and the outside of the hollow needle are connected to each other. With the hollow needle pressing the valve 1117, the valve 1117 is moved in a direction away from the seal member 1115, and the spring 1118 is compressed. In this state, in the introduction port 1108, the liquid flows from the outside to the inside of the hollow needle of the liquid ejection apparatus 100, and thereby is supplied from the liquid storage bag 101 to the liquid ejection apparatus 100.

In a case where the liquid storage bag 101 is detached from the liquid ejection apparatus 100, the spring 1118 returns to its original shape due to the elastic restoring force, the valve 1117 is biased, and the opening 1116 is sealed by the valve 1117. In the present embodiment, the sealing of the liquid storage bag 101 is maintained in this way.

Fig. 11C is a diagram for explaining liquid refilling in the present embodiment. Arrows R in Fig. 11C indicate flows of the liquid in the liquid refilling.

As illustrated in Fig. 11C, in the liquid refilling in the present embodiment, the upper adapter 901 (see Fig. 11B) is detached from the lower adapter 902, whereby the seal member 204 (see Fig. 11B) is detached from the refill port 203.

As the liquid is poured from the refill port 203 with the seal member 204 detached, the liquid flows into the flow path 303, the flow path 1103, the opening 1105, the flow path 1107, and the introduction port 1108 in this order, and the inside of the spout 202 is refilled with the liquid. The check valve 1114 allows the liquid to flow from the opening 1105 to the flow path 1107. However, the check valve 1114 does not allow the liquid to flow from the flow path 1107 to the opening 1105. Thus, the liquid will not flow backward from the front side to the rear side of the check valve 1114.

In the rear of the refill port 203, the liquid flows through the spout 202, the flow path members 1104a and 1104b, and the openings 1110a and 1110b of the spacer 1100 in this order, and the inside of the bag body 201 is refilled with the liquid. As a matter of course, the inside of the bag body 201 may be refilled with the liquid via a flow path 1110 formed inside the spacer 1100. Also, in liquid supply, the liquid may be taken in into the spacer 1100 via the flow path 1110

This structure also makes it possible to provide the liquid storage bag 101 having high reliability.

### [Other Embodiments]

In the aforementioned embodiments, the four liquid storage bags 101 (see Fig. 1 and others) have the same capacity. However, the four liquid storage bags 101 may have different capacities. For example, the capacity of the liquid storage bag 101 which stores the black ink that is the most frequently used ink may be larger than the capacities of the liquid storage bags 101 which store the other colors of inks.

The technologies disclosed herein may be applied to a monochrome printer including only the liquid storage bag 101 which stores the black ink or the like.

The shape of the bag body 201 (see Fig. 2 and others) may be a pillow type or a gusset type with a gusset. The shape of the bag body 201 is not limited as long as the bag body 201 can store a liquid and be housed inside the case 102.

In the aforementioned embodiments, the bag body 201 is formed by using the two sheet members, including the lower film as the first sheet member, and the upper film as the second sheet member. However, applications of the technologies disclosed herein are not limited to this. For example, the bag body 201 may have a structure formed by folding a single sheet member and bonding the outer periphery of the folded sheet member so as to form a liquid storage space thereinside.

In the example of Figs. 4A to 4D, the liquid introduction/discharge device 402 is attached after the seal member 401 is attached. However, the seal member 401 may be attached after the liquid introduction/discharge device 402 is attached. Also in this method, it is possible to discharge the old liquid and provide the new liquid for refilling.

According to an ink storage bag of the present disclosure, it is possible to prevent an ink leakage.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An ink storage bag (101) comprising:
a bag body (201) configured to store an ink; and
a spout (202) fixed to the bag body (201), **characterized in that**
the spout (202) includes:
a first opening (302) configured to discharge the ink from an inside of the bag body (201) to an outside,
a second opening (203) configured to refill the inside of the bag body (201) with the ink from the outside, and formed at a fixing portion (W) at which the spout (202) and the bag body (201) are fixed to each other, and,
a seal member (204) configured to seal the second opening (203) in an openable and closable manner.

2. The ink storage bag (101) according to claim 1, **characterized in that** the second opening (203) is formed at a welded portion at which the spout (202) and the bag body (201) are welded to each other.

3. The ink storage bag (101) according to claim 1 or 2, **characterized in that** the spout (202) includes a filter (602) configured to filter (602) the ink flowing from the inside of the bag body (201) toward the first opening (302).

4. The ink storage bag (101) according to any one of claims 1 to 3, further comprising an adapter (800) configured to connect with an ink ejection apparatus (100), **characterized in that**
the seal member (204) includes
a seal unit (802) configured to seal the second opening (203), and
a binder (803) configured to bind the seal unit (802) and the adapter (800) to each other.

5. The ink storage bag (101) according to claim 4, **characterized in that**
the adapter (800) includes a first member (902) and a second member (901) configured to fix the spout (202) between the first member (902) and the second member (901),
the first member (902) includes a positioning portion configured to position the spout (202), and
the second member (901) includes the seal member (204).

6. The ink storage bag (101) according to claim 4 or 5, **characterized in that** the adapter (800) and the seal member (204) are in different colors.

7. The ink storage bag (101) according to any one of claims 1 to 6, **characterized in that**
the spout (202) further includes a check valve (1114) configured not to allow the ink to flow from the first opening (302) toward the inside of the bag body (201) but to allow the ink to flow from the inside of the bag body (201) toward the first opening (302), and
the second opening (203) is located between the check valve (1114) and the bag body (201) in a direction in which the ink is discharged from the first opening (302).

8. The ink storage bag (101) according to any one of claims 4 to 7, **characterized in that**
the spout (202) further includes a valve unit (1120) connected to the first opening (302), and
the valve unit (1120) is configured to open in a state where the ink storage bag (101) is connected to the ink ejection apparatus (100) and close in a state where the ink storage bag (101) is disconnected from the ink ejection apparatus (100).

9. The ink storage bag (101) according to any one of claims 1 to 8, further comprising:
a spacer (1110) arranged inside the bag body (201) and configured to form a certain space inside the bag body (201); and
a flow path member (1104a, 1104b) configured to connect a flow path formed in the spout (202) and a flow path formed in the spacer (1110).

10. A method for manufacturing a recyclable ink storage bag (101), comprising the steps of:
preparing an ink storage bag (101) including a bag body (201) configured to store an ink, a first flow path configured to discharge the ink from an inside of the bag body (201) to an outside, and a spout (202) fixed to the bag body (201); and
forming a second flow path configured to connect the outside of the spout (202) and the first flow path.

11. The manufacturing method according to claim 10, further comprising the step of inserting a seal member (204) configured to seal the second flow path.

12. The manufacturing method according to claim 10 or 11, further comprising the steps of:
discharging the ink from the inside of the bag body (201) to the outside via the second flow path; and
refilling the inside of the bag body (201) with the ink from the outside via the second flow path.
